# EUROPÄISCHE PATENTSCHRIFT

(11) **EP 1 108 931 B1**
(45) Veröffentlichungstag und Bekanntmachung des Hinweises auf die Patenterteilung: **06.05.2004**
(21) Anmeldenummer: 00126658.4
(22) Anmeldetag: 05.12.2000
(51) Int. Cl.: F16K 11/078, F16K 31/60

(54) **Eingriffmischventil**
Single-lever mixing valve
Mitigeur à monocommande

(30) Priorität: 16.12.1999 DE 19961045
(43) Veröffentlichungstag der Anmeldung: 20.06.2001
(73) Patentinhaber: Grohe Water Technology AG & Co. KG, 58675 Hemer (DE)
(72) Erfinder: Rüth, Andreas, 58675 Hemer (DE); Günther, Michael, 58636 Iserlohn (DE)

(56) Entgegenhaltungen:
- DE-A- 2 815 990
- DE-A- 3 016 459
- DE-A- 3 202 040
- GB-A- 1 548 940
- US-A- 4 387 880

## Beschreibung

Die Erfindung betrifft ein Eingriffmischventil mit wenigstens einem in zwei Freiheitsgraden bewegbaren Ventilglied zur Bestimmung des Mischungsverhältnisses und der Gesamtdurchflussmenge, wobei zur Bewegung ein mit dem Ventilglied verbundener, aus einer Ventilkartusche herausgeführter, zu einer Mittelachse drehbarer und zu einer quer zur Mittelachse liegenden Achse verschwenkbarer Stellhebel in einem drehbaren, in der Ventilkartusche vorgesehenen Halsstück angeordnet ist, das mit einem in verschiedenen Drehstellungen zur Ventilkartusche steckbaren, in seiner Stecklage drehfest gehaltenen Anschlagring zur wahlweisen Drehbegrenzung des Stellhebels in Verbindung steht.

Ein Eingriffmischventil dieser Gattung ist aus der deutschen Offenlegungsschrift DE 32 02 040 A1 ebenso aus DE 2815990 A1 bekannt.

Der Erfindung liegt die Aufgabe zugrunde, bei dem im Oberbegriff des Anspruchs 1 angegebenen Eingriffmischventil die Vorrichtung zur Begrenzung der Temperatureinstellung zu verbessern und insbesondere die Einstellmöglichkeiten zu erweitern.

Diese Aufgabe wird erfindungsgemäß dadurch gelöst, dass an der Ventilkartusche wenigstens zwei axial vorstehende Kreisringstücke im Bereich des Halsstücks mit Abstand zueinander ausgebildet sind, deren Seitenflächen jeweils einen Anschlag für wenigstens eine radial nach außen vorstehende Nase des Anschlagrings zur wahlweisen Begrenzung der Drehbewegung des Halsstücks bilden. Weitere Ausgestaltungen der Erfindung sind in den Ansprüchen 2 bis 9 angegeben.

Mit den erfindungsgemäßen Maßnahmen wird insbesondere erreicht, dass die Kreisringstücke axial vorstehen und dadurch oberhalb der quer zur Mittelachse angeordneten Achse zur Verschwenkung des Stellhebels ein zusätzliches Stützlager des Halsstücks bilden und außerdem relativ leicht zugänglich sind. Durch die Anordnung von zwei Ringsegmenten wird insbesondere eine Feststellung des Halsstücks in einer gewünschten Drehstellung ermöglicht.
Mit der vorgeschlagenen Vorrichtung zur Drehbegrenzung wird somit folgendes ermöglicht:
- eine feingestufte Einstellung der Begrenzung der maximalen Mischwassertemperatur,
- eine feingestufte Einstellung der Begrenzung der minimalen Mischwassertemperatur,
- eine Festeinstellung der Mischwassertemperatur,
- ein zusätzliches, radial wirkendes Führungslager für das Halsstück.

Die erfindungsgemäße Vorrichtung zur Drehbegrenzung läßt sich darüber hinaus kostengünstig herstellen, wobei der Anschlagring und die weiteren Teile zweckmäßig aus Kunststoff im Spritzgießverfahren hergestellt werden können.

Ein Ausführungsbeispiel der Erfindung ist in der Zeichnung dargestellt und wird im folgenden näher beschrieben. Es zeigt
- Figur 1: einen Teil einer Wassermischarmatur mit einmontierter Ventilkartusche im Längsschnitt, wobei die Ventilkartusche sich in halb geöffneter und mittlerer Mischposition befindet;
- Figur 2: die in Figur 1 gezeigte Wassermischarmatur in der Schnittebene II;
- Figur 3: den oberen Bereich der Wasserarmatur gemäß Figur in der Schnittebene III, wobei der Anschlagring in einer mitt leren, keine Begrenzung der Drehbewegung bewirkender Position angeordnet ist;
- Figur 4: den oberen Bereich der Wasserarmatur gemäß Figur 1 in der Schnittebene III, wobei der Anschlagring sich in einer Steckposition befindet, in der die maximale Mischwassertemperatur begrenzt ist;
- Figur 5: den oberen Bereich der Wasserarmatur gemäß Figur 1 in der Schnittebene III, wobei der Anschlagring sich in einer Steckposition befindet, in der die minimale Mischwassertemperatur begrenzt ist;
- Figur 6: den oberen Bereich der Wasserarmatur gemäß Figur 1 in der Schnittebene III, wobei der Anschlagring sich in einer Steckposition befindet, in der eine Drehbewegung ausgeschlossen ist bzw. in der eine Festeinstellung der Mischwassertemperatur besteht;
- Figur 7: die in Figur 1 gezeigte Kartuschenhülse in Seitenansicht;
- Figur 8: die in Figur 7 gezeigte Kartuschenhülse in der Schnittebene VIII;
- Figur 9: die in Figur 7 gezeigte Kartuschenhülse in Draufsicht;
- Figur 10: den in Figur 1 gezeigten Anschlagring in Draufsicht;
- Figur 11: den in Figur 10 gezeigten Anschlagring in der Schnittebene XI.

Das in der Zeichnung dargestellte Wassermischventil mit Eingriffbedienung besteht aus einem zum Teil dargestellten Armaturenkörper 1 und einer in einem Aufnahmeraum 10 des Armaturenkörpers 1 angeordneten Ventilkartusche 2. In dem Armaturenkörper 1 ist für den separaten Wasserzulauf ein Kaltwasserkanal 12 und ein Warmwasserkanal 13 ausgebildet, die jeweils mit entsprechenden Anschlussöffnungen in der Ventilkartusche 2 verbunden sind. Außerdem ist in dem Armaturenkörper 1 für die Wasserabführung ein Mischwasserkanal 14 angeordnet, der ebenfalls an der Ventilkartusche 2 angeschlossen ist. Die Ventilkartusche 2 wird hierbei in bekannter Weise mit einer Spannmutter 11 gegen den Boden des Aufnahmeraums 10 verspannt.

Die Ventilkartusche 2 wird von einer Kartuschenhülse 20 und einem Kartuschenboden 21 gebildet, wobei in der Kartuschenhülse 20 ein Halsstück 3 begrenzt drehbar aber axial festliegend angeordnet ist. In dem Halsstück 3 ist ein Stellhebel 4 angeordnet, der zusammen mit dem Halsstück 3 um eine Mittelachse 200 begrenzt verdrehbar ist. Zusätzlich ist der Stellhebel 4 um eine senkrecht zur Mittelachse 200 angeordnete Achse 201 verschwenkbar in dem Halsstück 3 gehaltert. Der Stellhebel 4 ist mit einem Endbereich aus der Ventilkartusche 2 zur Aufnahme eines in der Zeichnung nicht dargestellten Betätigungsgriffs herausgeführt. Mit dem anderen Endbereich des Stellhebels 4 greift dieser drehfest in eine Ventilregulierscheibe 23 ein. Die Ventilregulierscheibe 23 ist hierbei aus einem oberen, aus Kunststoff hergestellten haubenförmigen Teil und einer vom oberen Teil formschlüssig gehaltenen, aus Hartstoff hergestellten unteren Scheibe gebildet. An der unteren Stirnseite der Ventilregulierscheibe 23 ist eine ortsfest in der Ventilkartusche 2 angeordnete Ventilsitzscheibe 22 ebenfalls aus Hartstoff angeordnet. Die Ventilsitzscheibe 22 wird dabei im wesentlichen vom Kartuschenboden 21 gehalten. Im Kartuschenboden 21 sind von Dichtungen umgebene Öffnungen für den Zufluss von Kalt- und Warmwasser und den Rückfluss von Mischwasser vorgesehen. In der Ventilsitzscheibe 22 und der Ventilregulierscheibe 23 sind entsprechende Öffnungen in bekannter Weise ausgebildet, so dass mit einer Schwenkbewegung des Stellhebels 4 um die quer zur Mittelachse 200 liegenden Achse 201 die Gesamtdurchflussmenge und durch eine Drehung des Stellhebels 4 um die Mittelachse 200 das Mischungsverhältnis von Kalt- und Warmwasser einstellbar ist. Mit dem Stellhebel 4 kann somit in einem ersten Freiheitsgrad das Mischungsverhältnis und in einem zweiten Freiheitsgrad die Gesamtdurchflussmenge an der Ventilkartusche 2 eingestellt werden.

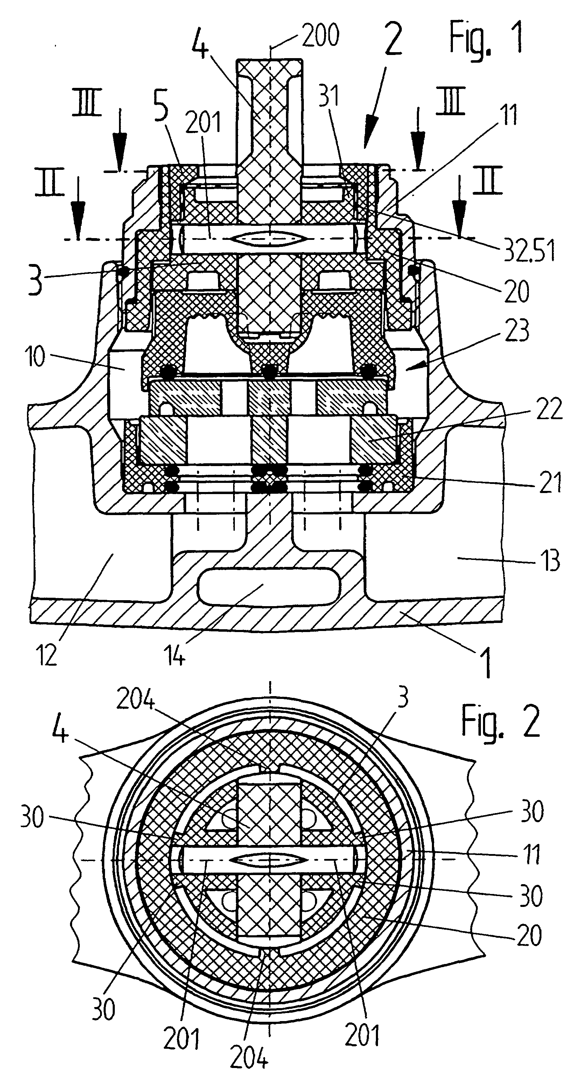

Wie es insbesondere aus Figur 2 der Zeichnung ersichtlich ist, ist der Drehwinkel des Halsstücks 3 in der Ventilkartusche 2 mit Hilfe von Anschlagnocken 204 an der Kartuschenhülse 20 und Anschlagnocken 30 am Halsstück 3 auf einen Drehwinkel von geringfügig weniger als 180° begrenzt. In der jeweiligen Anschlagposition wird nur Kaltwasser oder nur Heißwasser von der Ventilkartusche 2 abgegeben. In den Drehstellungen dazwischen wird aus dem zufließenden Kalt- und Warmwasser jeweils entsprechend temperiertes Mischwasser erzeugt.

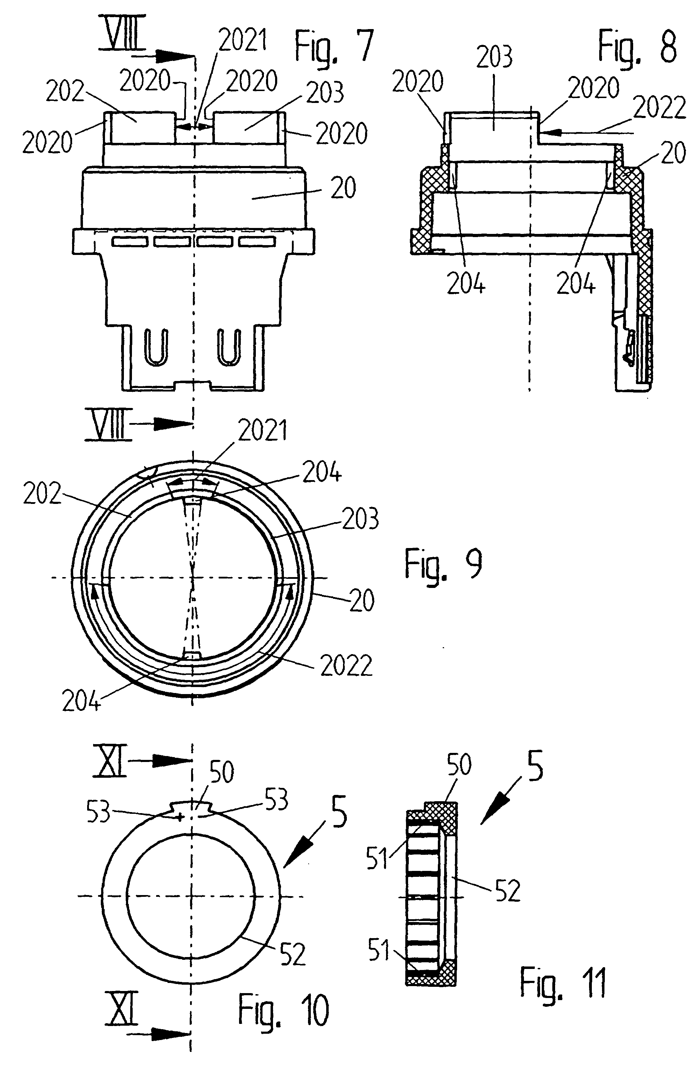

Zur weiteren wahlweisen einstellbaren Begrenzung der Mischwassertemperatur sind an der Kartuschenhülse 20 zwei mit Abstand zueinander angeordnete Kreisringstücke 202,203 angeformt, wie es insbesondere aus Figur 7 und 9 der Zeichnung ersichtlich ist. Die beiden Kreisringstücke 202,203 erstrecken sich über etwa einer Hälfte des zugehörigen Kreisbogens, wobei die beiden Kreisringstücke 202,203 mit einem ersten nahen Abstand 2021 zueinander angeordnet sind. Der zweite weitere Abstand 2022 erstreckt sich nahezu über die zweite Hälfte des zugehörigen Kreisbogens. An den Kreisringstücke 202,203 sind Seitenflächen 2020 ausgebildet, die als Anschläge für einen Anschlagring 5 vorgesehen sind. Der Anschlagring 5 ist mit einer radial nach außen vorstehenden Anschlagnase 50 versehen, wie es insbesondere aus Figur 10 und 11 der Zeichnung zu entnehmen ist. Die Anschlagnase 50 ist dabei so dimensioniert, dass sie spielfrei den nahen Abstand 2021 zwischen den beiden Kreisringstücken 202,203 ausfüllen kann.

Das Halsstück 3 ist mit einem im Durchmesser verkleinerten Ansatz 31 versehen, wie es insbesondere aus Figur 1 der Zeichnung zu entnehmen ist. Auf dem Außenmantel des Ansatzes 31 ist eine Verzahnung 32 aufgebracht. An einer Innenwandung des Anschlagrings 5 ist eine entsprechende Verzahnung 51 ausgebildet, wobei die Dicke des Anschlagrings 5 so bemessen ist, dass er mit seiner Außenwandung an der Innenwandung der beiden Kreisringstücke 202,203 in der Stecklage anliegt und ein radiales Stützlager bildet. Der Anschlagring 5 hat darüber hinaus am vorstehenden Endbereich eine flanschartige Verdickung 52, so dass eine relativ einfache Handhabung bzw. Einbringung in die Steckposition auf dem Ansatz 31 des Halsstücks 3 oder die Herausnahme aus seiner Steckposition ermöglicht ist. Auf der äußeren Stirnseite der Verdickung 52 sind außerdem zur Erleichterung des Einstellvorgangs Markierungen 53 vorgesehen.

Die wahlweise Einstellung der Drehbegrenzung kann in folgender Weise vorgenommen werden:

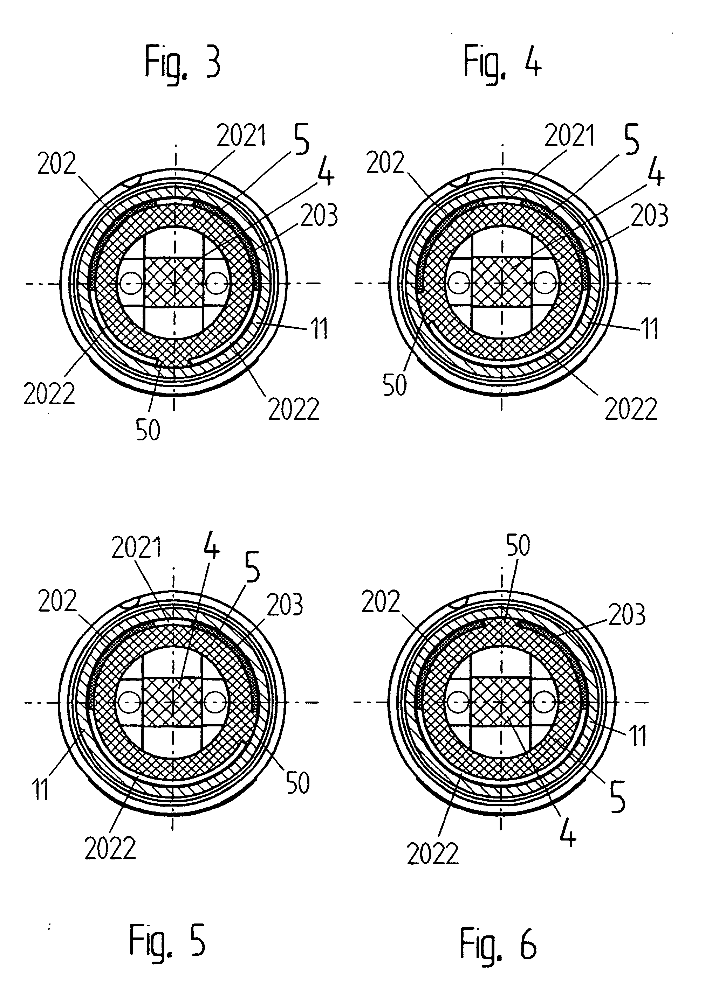

Wird der Anschlagring 5 mit seiner Nase 50 senkrecht zur quer liegenden Achse 201 in seine Steckposition gebracht, so bewirkt der Anschlagring 5 keine Beschränkung der Einstellmöglichkeiten im Bereich von Kalt- bis Heißwasser bzw. die Drehbewegung wird entsprechend der Anschlagnocken 204 an der Kartuschenhülse 20 und dem Halsstück 3 begrenzt. Eine derartige Steckposition des Anschlagrings ist in Figur 3 der Zeichnung dargestellt. Vorzugsweise wird der Anschlagring 5 in dieser Steckposition werksseitig montiert.
Soll eine Begrenzung der maximal möglichen Heißwassertemperatur eingestellt werden, so wird die Ventilkartusche 2 auf die gewünschte Wassertemperatur eingestellt. Sodann wird der Anschlagring 5 aus seiner Steckposition herausgenommen und mit seiner Nase 50 im Uhrzeigersinn so weit gedreht, bis die voreilende Seitenfläche der Nase 50 mit der Seitenfläche 2020 des Kreisringstücks 202 in Deckung gelangt. In dieser Drehstellung wird der Anschlagring 5 in seine Steckposition auf dem Ansatz 31 aufgebracht. Mit dieser Steckposition kann das Mischventil nur entgegen dem Uhrzeigersinn in Richtung auf niedriger temperiertes Mischwasser verstellt werden, wie es insbesondere aus Figur 4 der Zeichnung zu entnehmen ist.
Soll dagegen die Minimaltemperatur des Mischwassers begrenzt werden, so wird das Mischventil wiederum zunächst in die gewünschte Mischstellung mit der minimalen Mischwassertemperatur gebracht. Sodann wird der Anschlagring 5 aus seiner Steckposition herausgelöst und entgegen dem Uhrzeigersinn so weit gedreht, bis sich die voreilende Seitenfläche der Nase 50 mit der Seitenfläche 2020 des Kreisringstücks 203 in Deckung befindet. Danach wird der Anschlagring 5 in dieser Stellung in seine Steckposition gebracht, wie es in Figur 5 der Zeichnung dargestellt ist. In dieser Position des Anschlagrings 5 kann das Halsstück 3 nur im Uhrzeigersinn bewegt werden, so dass durch einen Drehvorgang nur wärmeres Wasser eingestellt werden kann.

Soll mit der Ventilkartusche nur ein bestimmt temperiertes Mischwasser oder nur Kaltwasser oder nur Heißwasser bereit gestellt werden, so wird zunächst mit dem Stellhebel 4 die Ventilkartusche auf die gewünschte Wassertemperatur eingestellt. Sodann wird der Anschlagring 5 aus seiner werksseitigen Stecklage herausgelöst und in eine derartige Drehstellung zum Halsstück 3 gebracht, in der die Nase 50 sich oberhalb des nahen Abstands 2021 befindet. Danach wird der Anschlagring 5 in seine Stecklage zurückgebracht, wobei die Nase 50 in den nahen Abstand 2021 spielfrei einfaßt und somit eine freie Wahl der Mischwassertemperatur blockiert.

## Patentansprüche

1. Eingriffmischventil mit wenigstens einem in zwei Freiheitsgraden bewegbaren Ventilglied zur Bestimmung des Mischungsverhältnisses und der Gesamtdurchflussmenge, wobei zur Bewegung ein mit dem Ventilglied verbundener, aus einer Ventilkartusche (2) herausgeführter, zu einer Mittelachse (200) drehbarer und zu einer quer zur Mittelachse (200) liegenden Achse (201) verschwenkbarer Stellhebel (4) in einem drehbaren, in der Ventilkartusche (2) vorgesehenen Halsstück (3) angeordnet ist, das mit einem in verschiedenen Drehstellungen zur Ventilkartusche (2) steckbaren, in seiner Stecklage drehfest gehaltenen Anschlagring (5) zur wahlweisen Drehbegrenzung des Stellhebels (4) in Verbindung steht, **dadurch gekennzeichnet, dass** an der Ventilkartusche (2) wenigstens zwei von ihrer oberen Endfläche axial vorstehende Kreisringstücke (202,203) im Bereich des Halsstücks (3) mit Abstand zueinander ausgebildet sind, deren Seitenflächen (2020) jeweils einen Anschlag für eine vom Außenumfang des Auschlagrings (5) radial nach außen vorstehende Nase (50) des Anschlagrings (5) zur wahlweisen Begrenzung der Drehbewegung des Halsstücks (3) bilden.

2. Eingriffmischventil nach Anspruch 1, **dadurch gekennzeichnet, dass** die beiden Kreisringstücke (202,203) so bemessen sind, dass sie einen nahen Abstand (2021) zueinander aufweisen, der den Abmessungen der Nase (50) des Anschlagrings (5) entspricht, so dass in einer gewünschten Drehstellung das Halsstück (3) von dem Anschlagring (5) fixierbar ist.

3. Eingriffmischventil nach Anspruch 1 oder 2, **dadurch gekennzeichnet, dass** die beiden Kreisringstücke (202,203) einen weiteren Abstand (2022) zueinander aufweisen, der so bemessen ist, dass in einer mittleren Steckposition des Anschlagrings (5), dessen Nase (50) etwa den gleichen Drehwinkel für das Halsstück (3) freigibt wie die als Anschlagnocken (204) vorgesehenen Festanschläge, so dass mit dem Anschlagring (5) in einer wahlweisen außermittigen Steckposition der Drehwinkel zur Einstellung der maximalen Wassertemperatur oder der Drehwinkel zur Einstellung der minimalen Wassertemperatur entsprechend begrenzt werden kann.

4. Eingriffmischventil nach wenigstens einem der Ansprüche 1 bis 3, **dadurch gekennzeichnet, dass** die beiden Kreisringstücke (202,203) so an der Ventilkartusche (2) angeordnet sind, dass sie für das Halsstück (3) über den Anschlagring (5) ein weiteres radiales Führungslager oberhalb der Achse (201 für die Schwenkbewegung bilden.

5. Eingriffmischventil nach wenigstens einem der Ansprüche 1 bis 4, **dadurch gekennzeichnet, dass** die Kreisringstücke (202,203) einstückig mit einer Kartuschenhülse (20) für die Ventilkartusche (2) ausgebildet sind.

6. Eingriffmischventil nach wenigstens einem der Ansprüche 1 bis 5, **dadurch gekennzeichnet, dass** an der Innenwandung des Anschlagrings (5) eine Verzahnung (51) ausgebildet ist, die in der Stecklage mit einer am Außenmantel des Halsstücks (3) ausgebildeten entsprechenden Verzahnung (32) zur drehfesten Verbindung in Eingriff steht.

7. Eingriffmischventil nach wenigstens einem der Ansprüche 1 bis 6, **dadurch gekennzeichnet, dass** der Anschlagring (5) wenigstens über das Halsstück (3) stirnseitig vorsteht und in diesem Bereich eine flanschartige Verdickung (52) aufweist.

8. Eingriffmischventil nach Anspruch 7, **dadurch gekennzeichnet, dass** auf der äußeren Stirnseite der Verdickung (52) eine oder mehrere Markierungen (53) vorgesehen sind.

9. Eingriffmischventil nach einem der Ansprüche 1 bis 8, **dadurch gekennzeichnet, dass** der Anschlagring (5) aus Kunststoff im Spritzgießverfahren hergestellt ist.

## Claims

1. Single-control-grip mixing valve having at least one valve member movable in two degrees of freedom for determining the mixing ratio and the overall amount of through-flow, wherein, for the movement, an adjusting lever (4) which is connected to the valve member and which extends out from a valve cartridge (2) and which is rotatable on a central axis (200) and pivotable on an axis (201) located transverse to the central axis (200) is arranged in a rotatable neck-piece (3) provided in the valve cartridge (2), which neck-piece (3) is, for limiting the rotation of the adjusting lever (4) as desired, connected to a stop ring (5) which can be pushed in in various rotational positions relative to the valve cartridge (2) and which, in its pushed-in position, is held non-rotatably, **characterised in that** on the valve cartridge (2) and projecting in an axial direction from its upper end face there are formed, in the region of the neck-piece (3), at least two arcuate parts (202, 203) spaced apart from one another, the lateral faces (2020) of which each form a stop for a nose (50) on the stop ring (5), projecting radially outwards from the external circumference of the stop ring (5), for limiting the rotational movement of the neck-piece (3) as desired.

2. Single-control-grip mixing valve according to claim 1, **characterised in that** the two arcuate parts (202, 203) are so dimensioned that they have a narrow spacing (2021) from one another, which narrow spacing (2021) corresponds to the dimensions of the nose (50) on the stop ring (5) so that the neck-piece (3) can be fixed in a desired rotational position by the stop ring (5).

3. Single-control-grip mixing valve according to claim 1 or 2, **characterised in that** the two arcuate parts (202, 203) have a relatively large spacing (2022) from one another, which relatively large spacing (2022) is so dimensioned that, in a middle pushed-in position of the stop ring (5), its nose (50) provides about the same angle of rotation for the neck-piece (3) as do the stop cams (204) provided as fixed stops so that, with the stop ring (5) in an other-than-middle pushed-in position as chosen, the angle of rotation can be appropriately limited for setting the maximum water temperature or the angle of rotation can be appropriately limited for setting the minimum water temperature.

4. Single-control-grip mixing valve according to at least one of claims 1 to 3, **characterised in that** the two arcuate parts (202, 203) are so arranged on the valve cartridge (2) that they form for the neck-piece (3) by way of the stop ring (5) a further radial guide mounting above the axis (201) for the pivoting movement.

5. Single-control-grip mixing valve according to at least one of claims 1 to 4, **characterised in that** the arcuate parts (202, 203) are of integral construction with a cartridge sleeve (20) for the valve cartridge (2).

6. Single-control-grip mixing valve according to at least one of claims 1 to 5, **characterised in that** on the inner wall of the stop ring (5) there is formed a toothing (51), which, in the pushed-in position, is in engagement with a corresponding toothing (32) formed on the external surface of the neck-piece (3) for a connection ensuring conjoint rotation.

7. Single-control-grip mixing valve according to at least one of claims 1 to 6, **characterised in that** the stop ring (5) projects at least over the neck-piece (3) at its end face and **in that** region has a flange-like enlargement (52).

8. Single-control-grip mixing valve according to claim 7, **characterised in that** on the outer end face of the enlargement (52) there are provided one or more markings (53).

9. Single-control-grip mixing valve according to one of claims 1 to 8, **characterised in that** the stop ring (5) is made from plastics material by an injection-moulding technique.

## Revendications

1. Vanne mélangeuse comportant au moins un organe de vanne pouvant se déplacer dans deux degrés de liberté pour déterminer la proportion du mélange et la quantité débitée globale, un levier de réglage (4) relié à l'organe de vanne, sortant d'une cartouche de vanne (2), pouvant tourner par rapport à un axe médian (200), pivotant par rapport à un axe (201) reposant transversalement par rapport à l'axe (200) et disposé pour un déplacement dans une pièce de col (3), pivotante prévue dans la cartouche de vanne (2) en liaison avec une rondelle de butée (5) enfichable en plusieurs positions de rotation par rapport à la cartouche de vanne (2) et maintenue dans sa position d'enfichage de façon à éviter la rotation, pour délimiter au choix la rotation du levier de réglage,
**caractérisée en ce qu'**
au moins deux pièces en anneau circulaire (202, 203) sont formées à la cartouche de vanne (2), dépassant dans le sens axial de leur surface d'extrémité supérieure, écartées l'une de l'autre dans la zone de la pièce de col (3), dont les surfaces latérales (2020) forment chaque fois une butée pour un nez (50) de la rondelle de butée (5) dépassant dans le sens radial vers l'extérieur de la périphérie de la rondelle de butée (5) pour la limitation au choix du mouvement de rotation de la pièce de col (3).

2. Vanne mélangeuse selon la revendication 1,
**caractérisée en ce que**
les deux pièces d'anneau circulaire (202, 203) sont dimensionnées de manière telle qu'elles présentent un écartement proche (2021) l'une par rapport à l'autre qui correspond aux dimensions du nez (50) de la rondelle de butée (5) si bien que la pièce de col (3) peut être fixée par la rondelle de butée (5) en une position de rotation souhaitée.

3. Vanne mélangeuse selon la revendication 1 ou 2,
**caractérisée en ce que**
les deux pièces d'anneau circulaire (202, 203) présentent un autre écartement (2022) l'une par rapport à l'autre, dimensionné de manière telle que, dans une disposition d'enfichage médiane de la rondelle de butée (5), son nez (50) libère sensiblement le même angle de rotation pour la pièce de col (3) que celui des butées fixes prévues en tant que came de butée (204), si bien qu'avec la rondelle de butée (5) en une position d'enfichage excentrée au choix, l'angle de rotation pour le réglage de la température maximale de l'eau ou l'angle de rotation pour le réglage de la température minimale de l'eau peut être limité de façon correspondante.

4. Vanne mélangeuse selon au moins l'une quelconque des revendications 1 à 3,
**caractérisée en ce que**
les deux pièces d'anneau circulaires (202, 203) sont disposées de manière telle à la cartouche de vanne (2) qu'elles forment pour la pièce de col (3), sur la rondelle de butée (5), un autre palier de guidage radial au-dessus de l'axe (201) pour le mouvement de rotation.

5. Vanne mélangeuse selon au moins l'une des revendications 1 à 4,
**caractérisée en ce que**
les deux pièces d'anneau circulaires (202, 203) sont constituées de manière monobloc avec un étui de cartouche (20) pour la cartouche de vanne (2).

6. Vanne mélangeuse selon au moins l'une des revendications 1 à 5,
**caractérisée en ce que**
une dentelure (51) est constituée au cloisonnement intérieur de la rondelle de butée (5) qui, dans la position d'enfichage, s'engage avec une dentelure (32) correspondante constituée à l'enveloppe extérieure de la pièce de col (3) pour réaliser une liaison empêchant la rotation.

7. Vanne mélangeuse selon au moins l'une des revendications 1 à 6,
**caractérisée en ce que**
la bague de butée (5) dépasse côté frontal au moins de la pièce de col (3) et présente dans cette zone un épaississement (52) à la manière d'une flasque.

8. Vanne mélangeuse selon la revendication 7,
**caractérisée en ce qu'**
un ou plusieurs marquages (53) sont prévus au côté frontal extérieur de l'épaississement (52).

9. Vanne mélangeuse selon l'une quelconque des revendications 1 à 8,
**caractérisée en ce que**
la rondelle de butée (5) est fabriquée en matière plastique selon un procédé de moulage par injection.
